Europäisches Patentamt

European Patent Office

Office européen des brevets

(11) Publication number: **0 525 403 A1**

# EUROPEAN PATENT APPLICATION

(21) Application number: **92110925.2**

(22) Date of filing: **27.06.92**

(51) Int. Cl.5: **B32B 17/10**, B29C 59/02,
C03C 27/12

(30) Priority: **28.06.91 JP 158410/91**
**16.04.92 JP 96561/92**

(43) Date of publication of application:
**03.02.93 Bulletin 93/05**

(84) Designated Contracting States:
**BE DE FR GB NL**

(71) Applicant: **SEKISUI KAGAKU KOGYO
KABUSHIKI KAISHA**
**4-4 Nishitenma 2-chome, Kita-ku
Osaka-shi, Osaka 530(JP)**

(72) Inventor: **Kato, Keita**
**148 Lyons Road
Scarsdale, NY 10583(US)**
Inventor: **Murashima, Masatoshi**
**1874-3, Kusato-cho
Kusato-shi, Shiga-ken(JP)**

(74) Representative: **Reitzner, Bruno, Dr. et al
Patentanwälte Dipl.-Ing. R. Splanemann Dr.
B. Reitzner, Dipl.-Ing. K. Baronetzky Tal 13
W-8000 München 2(DE)**

(54) Interlayer for laminated glass.

(57) An interlayer for laminated glass is disclosed. The interlayer comprises a sheet or film of thermoplastic resin at least one surface of which has many microscopic projections having a load curve obtained by measuring the surface roughness of the sheet or film with a surface roughness meter wherein the relative load length at a cutting level of 50% in any direction on the sheet or film is characteristically 20-50% of the measured length. In another embodiment an interlayer for laminated glass, the interlayer comprising a sheet or film of thermoplastic resin at least one surface of which has many microscopic projections, having a load curve obtained by measuring the surface roughness of said sheet or film with a surface roughness meter, wherein the mean relative load lengths at a cutting level of 30%, 50% and 75% in any direction on said sheet or film, represented by F(30), F(50) and F(75), are characterised by the following expressions:

$1.5\% \leqq F(30) \leqq 10\%$, $5\% \leqq F(50) \leqq 50\%$, $3.5 \leqq F(75)/F(50) \leqq 7.5$

The present invention provides interlayers for laminated glass with excellent de-airing characteristics and good transparency. The present invention also provides interlayers having improved workability during the lamination processes and reduced blocking between interlayers.

[Figure 1]

(a)

Load curve

(b)

Cross sectional curve

2

BACKGROUND OF THE INVENTION

1. Field of the Invention

This invention relates to interlayers for laminated glass. More precisely, this invention relates to an interlayer for laminated glass which has projections , the peaked portions of the unevenness, with a mean relative load length at a specific cutting level within a prescribed range.

2. Description of Related Art

Laminated glass is manufactured by inserting an adhesive interlayer between two pieces of sheet glass, then treating the resulting laminate with two processes: a preliminary press-joining and a main press-joining. The main objective of the preliminary press-joining process is to expel the air between the two pieces of sheet glass and the interlayer. De-airing is usually conducted by feeding the above described laminate into nip rolls or by placing the laminate in a rubber bag and then depressurizing the inside of the rubber bag.

The interlayer used in the above described laminated glass must have the characteristic of sufficiently de-airing during the preliminary press-joining process. It is also required that there be no blocking between the interlayers during storage and that the workability while stacking the glass sheets and the interlayer is good.

In order to meet these requirements, interlayers with microscopic unevenness (embossment) formed on their surface have been used. This embossment has been formed, for example, as random unevenness or as many lattice-like grooves.

Although these conventional interlayers with embossments formed on their surfaces are somewhat effective in terms of blocking characteristics between interlayers and workability when stacking the sheet glass and the interlayer, they are not satisfactory in terms of de-airing characteristics during the preliminary press-joining.

In particular, insufficient de-airing frequently occurs when the glass pair difference is great, such as when making delicately shaped laminated glass, and when the line speed in the laminating process is high. If de-airing is insufficient, then air bubbles remain between the sheet glass and the interlayer, such that adhesion becomes insufficient, it becomes impossible to obtain completely transparent laminated glass, and foaming occurs after an acceleration test. Therefore, various techniques have been proposed to improve the de-airing characteristics of interlayers for laminated glass wherein said interlayers have unevenness formed on their surfaces.

For example, an interlayer comprising a sheet and many independent projections formed on the surface of the sheet is disclosed in U.S. Patent No.4,452,840. The projections are formed in such way that each root formed between adjacent projections has the same bottom level and that the roots are continuous to each other. U.S.Patent No.4,452,840 attempts to improve the blocking between the interlayers and the workability when stacking the sheet glass and the interlayer. The form of the projections is specified to be a truncated cone/pyramid or a cone/pyramid with a head.

Furthermore, an interlayer comprising a sheet and many independent projections formed on the sheet is disclosed in U.S. Patent No.4,035,549. The unevenness is formed in such way that the depth of the roots between the projections is within a certain range.

However, the interlayer described in U.S.Patent No.4,452,840 mentioned above, is not effective enough with regard to de-airing characteristics during the preliminary press-joining.

We believe that such shortcomings of the conventional technology arise from the fact that no consideration has been given to the configuration of the unevenness formed on the interlayer surface. Recently, the process by which the sheet glass and the interlayer are preliminarily press-joined tends to be conducted very quickly, and the embossment formed on the sheet greatly resists smooth movement of the air particularly when the de-airing is done by nip rolls. When the configuration of the embossment is such that resistance to the air movement is great, the de-airing becomes insufficient and the quality and productivity of the laminated glass go down.

In order to secure the adhesiveness (sealing) to glass, the embossment is required to be easily crushed under the conditions of the preliminary press-joining, that is, at pressures of approximately 5-10 kg/cm2 and temperatures of 50-80 °C. However, it is not desirable for the embossment to be easily crushed before the above described preliminary press-joining conditions are reached, because in that case a peripheral unbalanced adhesion condition, called "premature sealing", occurs and then air accumulates, leading to seal breaking and also foaming after the main press-joining process.

Furthermore, even in the preliminary press-joining method of creating a vacuum inside a rubber bag, it is necessary to consider the balance between the ease of crushing and de-airing resistance in order to avoid foaming caused by the premature sealing of the peripheries.

Similarly, with regard to the interlayer described in U.S. Patent No.4,035,549 mentioned above, there are not any specific descriptions about the configuration of the projections. The de-airing characteristics are not necessarily good just because the roots formed on the sheet surface have roughly the same depth.

Furthermore, when de-airing is conducted by feeding the glass and the interlayer into nip rolls the laminate is aligned in a random direction relative to the feeding direction of the nip roll. There were cases in which the de-airing characteristics were compromised depending on the alignment direction of the laminate being fed into the nip roll, when the distribution of the projections formed on the sheet surface varied according to the direction.

## SUMMARY OF THE INVENTION

This invention was made to solve the shortcomings of the conventional technology described above. Its objective is to provide an interlayer for laminated glass which allows for successful de-airing during the preliminary press-joining process, in addition to preventing blocking between interlayers, improving workability during the lamination process of the sheet glass and the interlayer, and improving adhesiveness (sealing) between the sheet glass and the interlayer.

## BRIEF DESCRIPTION OF THE DRAWINGS

Fig.1(a) is a load curve of the surface of an interlayer of this invention for laminated glass.
Fig.1(b) is a cross sectional curve obtained by measuring the surface roughness of an interlayer.
Fig.2 is a load curve of the surface of the interlayer obtained in Example 1.
Fig.3 is a load curve of the surface of the interlayer obtained in Comparative example 1.
Fig.4 is a load curve of the surface of the interlayer obtained in Comparative example 2.
Fig.5 is a load curve of the surface of the interlayer obtained in Comparative example 3.

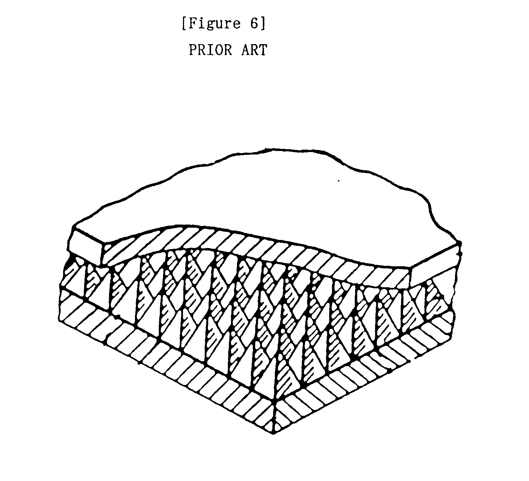

Fig.6 is an angle view of laminated glass using a conventional interlayer for laminated glass.

## DETAILED DESCRIPTION OF THE INVENTION

The present invention comprises an interlayer for laminated glass, said interlayer comprising a sheet or film of thermoplastic resin at least one surface of which has many microscopic projections, wherein, in the load curve obtained by measuring the surface roughness of said sheet or film with a surface roughness meter, the relative load length at the cutting level of 50% in any direction on said sheet or film is characteristically 20-50% of the measured length.

This invention also comprises an interlayer for laminated glass, said interlayer comprising a sheet or film of thermoplastic resin at least one surface of which has many microscopic projections, wherein, in the load curve obtained by measuring the surface roughness of said sheet or film with a surface roughness meter, the mean relative load lengths at the cutting level of 30%, 50% and 75% in any direction on said sheet or film, represented by F(30), F(50) and F(75), are characteristically as indicated in the following expressions:

$$1.5\% \leq F(30) \leq 10\%, \quad 5\% \leq F(50) \leq 50\%, \quad 3.5 \leq F(75)/F(50) \leq 7.5$$

This invention comprises a sheet or film (hereafter referred to as simply a "sheet") of thermoplastic resin at least one surface of which has many microscopic projections. Therefore, it includes cases where the sheet has such projections on both surfaces. The interlayer of this invention for laminated glass can be used for manufacturing laminates of said interlayer with glass, and in some cases with other thermoplastic resin layers.

Any kind of thermoplastic resin can be used to form the above described sheet. Some examples are polyvinyl butyral, polyurethane, polyvinyl chloride-ethylene copolymers, vinyl chloride-ethylene-glycidyl methacrylate copolymers, vinyl chloride-ethylene-glycidyl acrylate copolymers, vinyl chloride-glycidyl methacrylate copolymers, vinyl chloride-glycidyl acrylate copolymers. polyvinyl vinylidene, polyvinyl vinylidene-acrylonitrile copolymers, polyvinyl acetate, ethylene-vinyl acetate copolymers, and polyvinyl acetale-polyvinyl butyral mixture. Of these, polyvinyl butyral, polyurethane and vinyl chloride-ethylene-glycidyl methacrylate copolymers are preferably used.

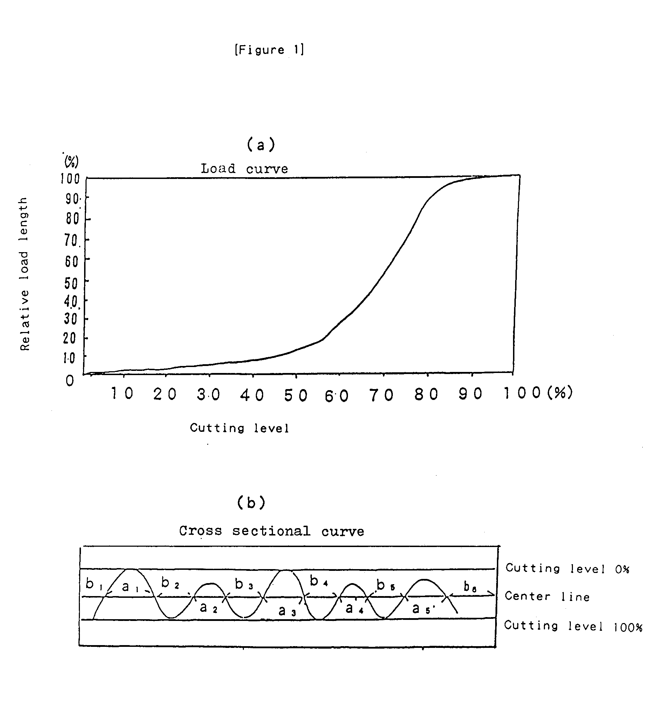

The load curve specified in this invention is defined in the ISO standard R468-6.6. The load curve is obtained as follows: a cross sectional curve, as shown in Figure 1(b), is obtained by measuring the surface roughness of the sheet with a surface roughness meter (in the figure, the center line is parallel to the sheet or the film surface); then the highest point of the cross sectional curve (the highest point of the projections) is defined to be at a cutting level of 0%, and the lowest point of the cross sectional curve (the lowest point of the roots) is defined to be at a cutting level of 100%; the load curve is the ratio of the total length of the portions of the line parallel with the center line (50% cutting level) which cross the cross sectional curve to the measured length, said ratio being plotted against the cutting level for said line from 0 to 100%. Figure 1(a) is an example of load curves obtained by measuring the unevenness on the surface of the interlayer of this invention by using a surface roughness meter.

The definition of the relative load length at each cutting level of this invention is explained as follows by taking the example of the cutting level of 50%: the relative load length is a ratio of the total length of the portions of the center line shown in Figure 1(b) which cross the cross sectional curve, i.e. (a1 + a2 + ..... an), to the measured length (a1 + a2 + ..... an + b1 + b2 + ... bn). The mean relative load length F(50) is this ratio's average value.

In one embodiment of the present invention , the relative load length at the cutting level 50% is 20-50% of the measured length.

In another embodiment of the present invention, the mean relative load length at F(50) ( at the cutting level 50%) is 5-50%.

The load curve is one side of the average configuration of the surface embossment depicted two-dimensionally (if you fold it back along the cutting level axis, the average embossment configuration is obtained). The area above the load curve can be considered to be the cross sectional area of the air passage at the time of de-airing, i.e. ease of air removal. The area under the load curve can be considered to be the resistance to the air movement, and at the same time it correlates to the ease of embossment crushing during the lamination process.

In the first embodiment of the present invention, the relationships of the relative load length at the cutting level of 50% with the interlayer's venting characteristic, and with the blocking characteristic are as follows:

When the relative load length is less than 20%, the distribution of the projections becomes very sparse, thus blocking occurs, and also the glass and the interlayer stick together at the glass peripheries before the internal air is purged (premature sealing of the edges) so that air bubbles remain after the main press-joining. Therefore, this is undesirable.

When the relative load length is more than 50%, because the resistance against the air movement becomes great, there will be residual air after a fast process, particularly when de-airing with drawing rolls. Furthermore, since the contact area with the glass is large, there will be a great deal of friction when inserting the interlayer between two pieces of glass, resulting in poor workability. Therefore, this is undesirable.

On the other hand, when the relative load length is 20-50%, de-airing performance is excellent, and it is also possible to satisfy both the blocking prevention and the workability improvement requirements.

In the second embodiment of the invention, when the mean relative load length at F(30) is less than 1.5% , or at F(50) is less than 5%, the distribution of the peaks (projections) becomes very sparse or the projections become thin, thus blocking between the interlayers increases, and also the glass and the interlayer stick together at the glass peripheries before the internal air is purged (premature sealing of the edges) so that air bubbles remain after the main press-joining. Therefore, this is undesirable.

When the mean relative load length at F(30) is more than 10% or at F(50) is more than 50%, the resistance against the air movement becomes great, thus there will be residual air after the de-airing in the preliminary press-joining with rolls. Also, since the peaks are not easy to crush, defective sealing will occur, resulting in problems such as foaming after the main press-joining process or bake-foaming. Furthermore, the surface friction resistance becomes great so that the workability during stacking with the glass is poor. Therefore, this is undesirable.

Even when F(50) is in the range between 5 to 50%, if F(75)/F(50) is less than 3.5% , then blocking between the interlayers increases, and also the glass and the interlayer stick together at the glass peripheries before the internal air is purged (premature sealing of the edges) so that air bubbles remain after the main press-joining. Therefore, this is undesirable. When F(75)/F(50) is more than 7.5, then resistance against the air movement becomes great, thus there will be residual air after de-airing particularly in the preliminary press-joining with rolls. Also, since the peaks are not easy to crush, defective sealing will occur, resulting in problems such as foaming after the main press-joining process or bake-foaming.

In this invention, there is no specific limitation as to the configuration of the peaks of the unevenness on the interlayer. Examples include cones such as circular cones and pyramids, pseudo cones, columns such as prisms and cylinders, and half spheres. Circular cones, pyramids and half spheres are preferable. Peaks with flat tops are not preferable as blocking between interlayers and workability while stacking the sheet glass and the interlayer is increased.

Furthermore, it is not necessary for all the projections to have the same configuration but rather a mixture of circular cones, pyramids, half spheres and others may be used. Also, the depth of the roots (valleys) does not have to be to the same level, as long as the specifications of the above described load curve are satisfied.

The interval of the peaks described above can either be regular or irregular. The interval is preferably 100-2,000 micrometers, and more preferably 200-1,000 micrometers.

The size of the peaks can vary depending on the application for the interlayer and processing conditions (temperature, time and speed). The height is preferably 5-500 micrometers, more preferably 20-100 micrometers, even more preferably 20-50 micrometers. The base length of a peak is preferably 30-900 micrometers.

The interlayer for laminated glass of this invention can be manufactured by any method which can form the unevenness described above. For example, it can be easily manufactured with prior art methods including the methods which use forming dies such as emboss-rolls and calender rolls, the die extrusion methods and the deformed die extrusion method. During the forming process, heat stabilizers and antioxidants can be blended into the thermoplastic resin composition, and it is also possible to blend adhesion strength adjusting agents, such as metal salts, to impart high piercing resistance.

This invention makes it possible, during the preliminary press-joining, for the unevenness of the interlayer not to hinder the movement (purging) of the air between the glass sheets and the interlayer, so that the air can be smoothly purged under a wide range of temperature and pressure conditions, resulting in sufficient de-airing. Therefore, a good adhesion between the glass sheets and the interlayer is achieved and it is possible to efficiently manufacture completely transparent laminated glass without nonconformities.

Also, for example, it improves the drawing speed (line speed) of preliminary press-joining with drawing rolls, shortens the depressurizing time, and expands the suitable temperature ranges of both methods, greatly contributing to making recent lamination processes faster and more efficient.

EXAMPLES

We will describe the first embodiment of this invention by referring to an embodiment example and comparative examples as follows:

Example 1

By using an alumina abrasive with a abrasive particle size of No. 30 as specified in JIS R6001, 4 blast treatments were conducted with an air pressure of 5 kg/cm2 to form random embossment on a roll, obtaining a peak height of approximately 75 micrometers (ISO-Rz). Next, lapping was done by vertical grinding until the peak height became approximately 35 micrometers. Then, by using an alumina abrasive with an abrasive particle size of No. 120 as specified in JIS R6001, 2 blast treatments were conducted with an air pressure of 3 kg/cm2.

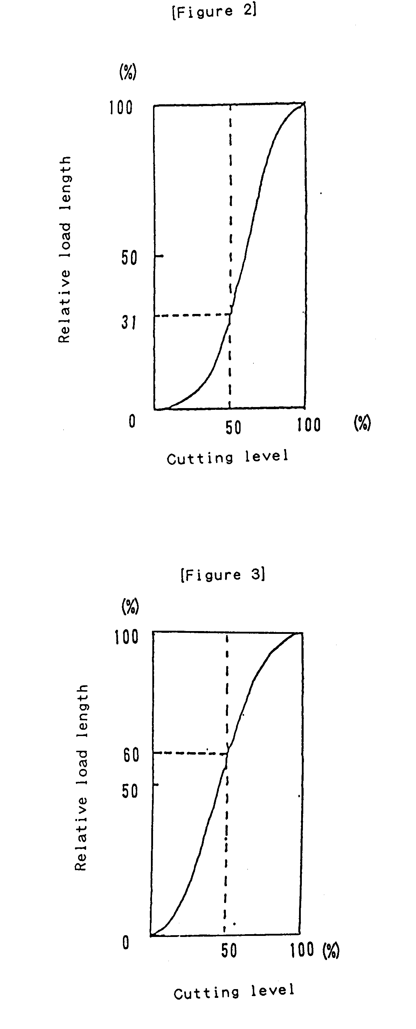

Using the emboss roll obtained as described above, an interlayer of polyvinyl butyral was prepared. The surface configuration of the obtained interlayer is random embossment without deep valleys, and the embossment roughness (ISO-Rz) was about 35 micrometers, the pitch (distance between peaks) was about 400 micrometers in the direction of the width (MD) and about 400 micrometers in the direction of the flow (TD). The load curve obtained by measuring the peaks of this interlayer is shown in Figure 2.

Comparative example 1

By using grit with the abrasive No. 60 specified in JIS R6001, 4 blast treatments were conducted at an air pressure of 3 kg/cm2 to form random embossment with a peak height of approximately 35 micrometers (ISO-Rz) on the roll. An interlayer was prepared in the same manner as Example 1 (Embodiment example 1) by using the embossed roll thus obtained. The surface configuration of the obtained interlayer is complete random embossment, and the embossment roughness (ISO-Rz) was about 35 micrometers, the pitch was about 220 micrometers in the direction of the width and about 220 micrometers in the direction of the flow. The load curve obtained by measuring the peaks of this interlayer is shown in Figure 3.

Comparative example 2

6

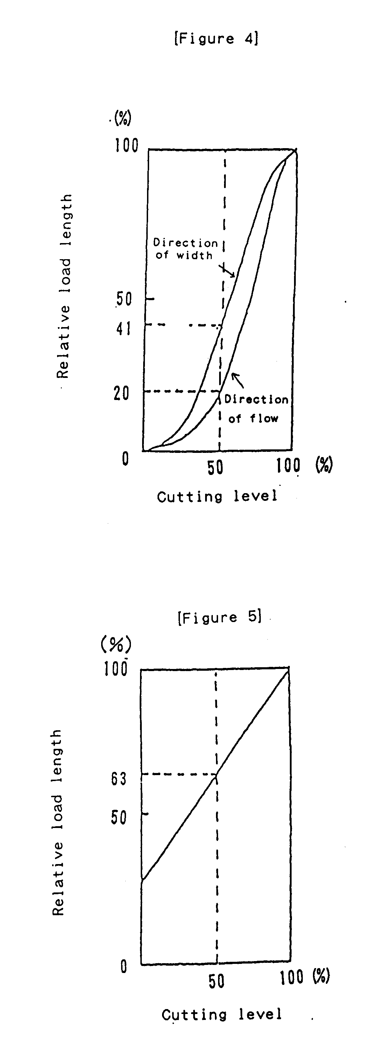

An interlayer made of polyvinyl butyral resin was prepared with extrusion molding using stiff slip(s) with metal die lip(s). The surface configuration of the obtained interlayer is ripple-like, the embossment roughness (ISO-Rz) was about 35 micrometers, and the pitch was about 300 micrometers in the direction of the width and about 550 micrometers in the direction of the flow. The load curve obtained by measuring the peaks of this interlayer is shown in Figure 4.

Comparative example 3

An interlayer made of polyvinyl butyral resin with a surface peak configuration of pyramids was prepared by compression molding. The surface configuration of the obtained interlayer is regular pyramids with tops, the embossment roughness (ISO-Rz) was about 35 micrometers, and the pitch was about 200 micrometers in the direction of the width and about 200 micrometers in the direction of the flow. The load curve obtained by measuring the peaks of this interlayer is shown in Figure 5.

Laminated glass was prepared with each of the following A and B methods using the interlayers obtained in Example 1 and Comparative examples 1-3.

Method A:

Preliminary press-joining with drawing rolls and main press-joining

The interlayer was inserted between two pieces of sheet glass and the excess portion was cut off. This laminate was heated up to each of the temperatures 50, 60, 70, 80, 90 and 100 °C by a heat oven and fed into nip rolls rotating at a line speed of 10 m/minute, thus the preliminary press-joining was conducted by the drawing method. After the preliminary press-joining, the laminate was kept in an autoclave for 10 minutes at a pressure of 14 kg/cm2 and a temperature of 140 °C, and then the temperature was lowered to 50 °C and the pressure was lowered, thus completing the main press-joining.

Method B:

Preliminary press-joining with the vacuum method and main press-joining

The interlayer was inserted between two pieces of sheet glass and the excess portion was cut off. This laminate T body was placed in a rubber bag, and the inside of the rubber bag was connected to a depressurizing system. It was kept in a 600 mmHg vacuum for 10 minutes at external air heating temperatures of 60, 80, 100 and 120 °C. Then the pressure was restored to atmospheric pressure to complete the preliminary press-joining. The main press-joining was conducted in the same manner as item a described above.

The laminated glass obtained was tested as follows: 10 pieces of laminated glass with the same type of interlayers were heated at 135 °C for 2 hours in an oven, cooled to room temperature, then checked for the number of samples which produced bubbles. The results for the laminated glass prepared using drawing rolls are shown in Table 1, and the results for the laminated glass prepared using the vacuum method are shown in Table 2.

Using the interlayers obtained in Example 1 and Comparative examples 1-3, 15 x 30 cm test glass pieces were made with each type of interlayer, and 150 of them were stacked and let stand for 24 hours at a temperature of 20 °C and 23% relative humidity. The lowest 2 sheets were then tested for T-peeling with a tensile tester at a drawing speed of 500 mm/minute. The stress at 15 cm width was presented as the self-adhesion strength. The results are shown in Table 3.

The results shown in Tables 1-3 clearly indicate the following:

1) The laminated glass prepared using the interlayer of Example 1 has a wider suitable temperature range for both the drawing roll and vacuum preliminary press-joining processes.

2) The laminated glass prepared using the interlayer of Comparative example 1 has insufficient peripheral sealing during the preliminary press-joining with drawing rolls at 50 °C or lower, so that the air penetrates inside during the main press-joining, making it impossible to obtain transparent laminated glass. At temperatures higher than 90 °C, the peripheries are sealed first so that a lot of air remains inside, and thus satisfactory laminated glass cannot be obtained. With regard to the vacuum preliminary press-joining process, peripheral sealing is insufficient at temperatures of 60 °C or lower, so that air penetration occurs during the main press-joining.

3) The laminated glass prepared using the interlayer of Comparative example 2, during the preliminary press-joining with drawing rolls, shows different de-airing performances for the direction of the width of the interlayer and the direction of the flow. Therefore, the de-airing direction cannot be arbitrary.

4) The laminated glass prepared using the interlayer of Comparative example 3 has a narrow suitable temperature range with the high speed (10 m/minute) drawing method, as shown in Table 2. This is because the area under the curve is very large in the load curve shown in Figure 1(a), i.e. the passages of the air drawn are narrow, resulting in great resistance of the embossment against the air movement.

5) According to Table 3, the interlayers of Comparative example 1 and Comparative example 3 have high self-adhesion strength, so that workability is poor when interlayers which have been stored in stacks are peeled apart one by one to be inserted between glass sheets. In particular, the interlayers of Comparative example 3 have high adhesion between the flat portions at the peak-tops of each sheet, and exhibit high self-adhesion strength.

We will describe the second embodiment of this invention by referring to the following Examples and Comparative examples.

Example 2

By using emboss rolls, an embossment was formed on both surfaces of an interlayer comprised of plasticized polyvinyl butyral. The embossment consists of a main embossment and a random sub-embossment. The pitch, roughness, configuration and the mean relative load length at each cutting level of the embossment are shown in Table 4.

Example 3

By using engraved emboss rolls, an embossment was formed on both surfaces of an interlayer comprised of plasticized polyvinyl butyral. The embossment consists only of a main embossment. The pitch, roughness, configuration and the mean relative load length at each cutting level of the embossment are shown in Table 4.

Example 4

By using an alumina abrasive with an abrasive particle size of No. 20 as specified in JIS R6001, blast treatments were conducted (roughness approximately 100 micrometers), and lapping was done by vertical grinding until the roughness was approximately 30 micrometers, then a blast treatment was done using an alumina abrasive with a particle size of No. 120 to prepare the emboss roll to be used. Otherwise, the same procedure as Example 2 was employed to form an embossment comprising a main embossment and a sub-embossment. The pitch, roughness, configuration and the mean relative load length at each cutting level of the embossment are shown in Table 4.

Comparative example 4

An interlayer was made in the same manner as Example 2 except for the fact that the surface configuration of the interlayer was a completely random embossment. The pitch, roughness, configuration and the mean relative load length at each cutting level of the embossment are shown in Table 4.

Comparative example 5

An interlayer made of polyvinyl butyral resin was prepared with extrusion molding using stiff slip(s) of metal die lip(s). The surface configuration of the obtained interlayer was ripple-like. The pitch, roughness, configuration and the mean relative load length at each cutting level of the embossment are shown in Table 4.

Comparative example 6

An interlayer was made in the same manner as Example 2 except for the fact that a surface projection configuration of pyramids with rounded tops was given using compression molding dies. The pitch, roughness, configuration and the mean relative load length at each cutting level of the embossment are shown in Table 4.

By using the interlayers obtained in Examples 2-4 and Comparative examples 4-6, laminated glass was prepared according to the method C described below and the previously described method B.

Method C:

Preliminary press-joining with a roll press and main press-joining

The interlayer was inserted between two pieces of sheet glass and the excess portion was cut off. This laminate was heated up to each of the temperatures 50, 60, 70, 80, 90 and 100 ° C by a heat oven, and fed into nip rolls rotating at a line speed of 13 m/minute and a pressure of 2.5 kg/cm2, and the preliminary press-joining was conducted by the roll press method. With laminated glass with a delicate configuration in mind, the pressure was set lower than usual and the line speed was set faster than usual. The main press-joining was done by the same method as in the previously described method A.

Evaluation of the laminated glass prepared with the preliminary press-joining with a roll press method is shown in the Table 5, and the evaluation of the laminated glass prepared with the preliminary press-joining with a vacuum method is shown in the Table 6. The definitions of the [circle], [triangle], x and xx in the tables are the same as those Table 1.

As described above in detail, it is possible to provide laminated glass with excellent de-airing characteristics and good transparency by using the interlayer of this invention in laminated glass. Also, de-airing with a shorter depressurizing process within a wider temperature range becomes possible in the preliminary press-joining, resulting in improved workability in lamination processes.

Therefore, the interlayer of this invention for laminated glass is effective particularly when the line speed of the lamination process is high or when manufacturing delicately shaped laminated glass with a great glass pair difference. Moreover, since the self-adhesive strength of the interlayers for laminated glass is low, blocking between the interlayers can be prevented, allowing storage in stacks.

Table 1

| Examples | Drawing direction | Preliminary press-joining temperature (°C) | | | | | | Remarks |
|---|---|---|---|---|---|---|---|---|
| | | 50 | 60 | 70 | 80 | 90 | 100 | |
| Embodiment example 1 | Width | O | O | O | O | O | O | |
| | Flow | O | O | O | O | O | O | |
| Comparative example 1 | Width | XX | X | O | O | X | XX | Defective sealing at 50 ° C. |
| | Flow | XX | X | O | O | | X | XX | Premature sealing at 90 and 100 ° C. |
| Comparative example 2 | Width | O | O | O | O | O | O | Premature sealing a 100 ° C for "flow". |
| | Flow | X | O | O | O | O | XX | |
| Compalative example 3 | Width | XX | X | O | O | △ | X | Defective seal at 50 ° C. |
| | Flow | XX | X | O | O | △ | X | |
| (Symbols) [Circle]: No occurrence of foaming. [Triangle]: Foaming in 2 sheets or less of the 10 sheets. X: Foaming in 3 sheets or more of the 10 sheets. XX: Residual bubbles detected after the main press-joining (before the bake test). (Conditions) Line speed: 10 m/minute Press air cylinder pressure of the nip rolls: 3,5 kg/cm2 | | | | | | | | |

Table 2

| Examples | Preliminary press-joining temperature (°C) | | | | Remarks |
|---|---|---|---|---|---|
| | 60 | 80 | 100 | 120 | |
| Embodiment example 1 | ○ | ○ | ○ | ○ | |
| Comparative example 1 | XX | ○ | ○ | ○ | Peripheral sealing was insufficient at 60 °C, allowing air penetration during the main press-joining. |
| Comparative example 2 | ○ | ○ | ○ | X | At 120 °C, the peripheries were crushed first, resulting in internal residual air. |
| Comparative example 3 | ○ | ○ | ○ | X | Same as above. |
| (Symbols) The definitions of [circle], [triangle], x and xx are the same as Table 1. (Conditions) Vacuum: 600 mmHg/10 minutes | | | | | |

Table 3

| | Embodiment example 1 | Comparative example 1 | Comparative example 2 | Compalative example 3 |
|---|---|---|---|---|
| Self-adhesive strength (g/cm width) | 110 | 180 | 100 | 250 |
| Remarks | Easy to peel Good workability | Hard to peel Poor workability | Easy to peel Good workability | Hard to peel Poor workability |

<br/>

[Table 4]

| | Embodiment example 2 | Embodiment example 3 | Embodiment example 4 | Comparative example 4 | Comparative example 5 | Comparative example 6 |
|---|---|---|---|---|---|---|
| Main embossment | | | | | | |
| Pitch (micrometers) | 450 | 300 | 600 | 190 | 280 | 370 |
| Roughness (micrometers) | 40 | 35 | 35 | 38 | 38 | 42 |
| Projection configuration | Circular cone | Pyramid | Pseudo circular cone | Temple bell shape | Ripples | Pseudo pyramid |
| Base length (micrometers) | 150 | 200 | 150 | 190 | 200 | 330 |
| Sub-embossment | | | | | | |
| Pitch (micrometers) | 100 | None | Same as Embodiment example 1 | Same as Embodiment example 1 | None | None |
| Roughness (micrometers) | 15 | | | | | |
| Base length (micrometers) | 15 100 | | | | | |
| F (30) | 3.5 | 4.3 | 4.7 | 18.2 | 3.9 | 10.8 |
| F (50) | 10.3 | 11.6 | 21.9 | 56.7 | 24.2 | 42.1 |
| F (75) | 68.1 | 60.5 | 80.6 | 91.8 | 73.8 | 81.6 |
| F (75)/F (50) | 6.6 | 5.2 | 3.7 | 1.6 | 3.0 | 1.9 |

Table 5

| Examples | Preliminary | press-joining | | temperature | (°C) | | Remarks |
|---|---|---|---|---|---|---|---|
| | 50 | 60 | 70 | 80 | 90 | 100 | |
| Embodiment examples 2-4 | O | O | O | O | O | O | Good throughout a wide temperature range. |
| Comparative example 4 | XX | X | O | O | △ | XX | Premature sealing easily occurs. Insufficient sealing. |
| Comparative example 5 | △ | O | O | O | △ | X | A bit of premature sealing. Slightly insufficient sealing. |
| Comparative example 6 | X | △ | O | O | X | XX | Premature sealing easily occurs. Sealing is a bit defective. |

Table 6

| Examples | Preliminary press-joining temperature (°C) | | | | Remarks |
|---|---|---|---|---|---|
| | 60 | 80 | 100 | 120 | |
| Embodiment examples 2-4 | O | O | O | O | Good in a wide temperature range. |
| Comparative example 4 | XX | O | X | XX | Premature sealing easily occurs. Insufficient sealing. |
| Comparative example 5 | O | O | △ | X | A bit of premature sealing. Slightly insufficient sealing. |
| Comparative example 6 | X | O | △ | XX | Premature sealing easily occurs. Sealing is a bit defective. |

## Claims

1. An interlayer for laminated glass comprising a sheet or film of thermoplastic resin at least one surface of which has many microscopic projections having a load curve obtained by measuring the surface roughness of said sheet or film with a surface roughness meter and having a relative load length at a cutting level of 50% in any direction on said sheet or film of about 20% to 50% of a measured length.

2. An interlayer in accordance with claim 1 wherein said thermoplastic resin is selected from polyvinyl butyral, polyurethane, polyvinyl chloride-ethylene copolymers, vinyl chloride-ethylene-glycidyl methacrylate copolymers, vinyl chloride-ethylene-glycidyl acrylate copolymers, vinyl chloride-glycidyl acrylate copolymers, polyvinylvinylidene, polyvinyl vinylidene-acrylonitrile copolymers, polyvinyl acetate, ethylene-vinyl acetate copolymers, and polyvinyl acetate-polyvinyl butyral mixtures; preferably from polyvinyl butyral, polyurethane, and vinyl chloride-ethylene glycidyl methacrylate copolymers.

3. An interlayer in accordance with claims 1 or 2 wherein the microscopic projections have roots and peaks and are shaped as a configuration selected from cones, circular cones, pyramids, pseudo cones, columns, prisms, cylinders, half spheres and mixtures therof, preferably as a configuration selected from circular cones, pyramids, half spheres and mixtures thereof.

4. An interlayer in accordance with anyone of claims 1 - 3 wherein said peaks are at regular or irregular intervals and the intervals are about 100 to 2000 $\mu$m, preferably about 200 to 1000 $\mu$m.

5. An interlayer in accordance with anyone of claims 1 - 4 wherein said peaks have a height of about 5 to 500 $\mu$m, preferably of about 20 to 100 $\mu$m, in particular of about 20 to 50 $\mu$m.

6. An interlayer in accordance with anyone of claims 1 - 5 wherein said peaks have a base length of about 30 to 900 $\mu$m.

7. An interlayer for laminated glass comprising a sheet or film of thermoplastic resin at least one surface of which has many microscopic projections having a load curve obtained by measuring the surface roughness of said sheet or film with a surface roughness meter and having a mean relative load length at a cutting level of 30% in any direction on said sheet or film, represented by F(30), wherein said load length is about 1.5% $\leq$ F(30) $\leq$ 10%.

8. An interlayer in accordance with claim 7 wherein (a) said thermoplastic resin is defined as in claim 2; and (b) the microscopic projections are defined as in anyone of claims 3 - 6.

9. An interlayer for laminated glass comprising a sheet or film of thermoplastic resin at least one surface of which has many microscopic projections having a load curve obtained by measuring the surface roughness of said sheet of film with a surface roughness meter and having a mean relative load length at a cutting level of 50% in any direction on said sheet or film, represented by F(50), wherein said load length is about 5% $\leq$ F(50) $\leq$ 50%.

10. An interlayer in accordance with claim 9 having mean relative load lengths at cutting levels of 50% and 75% in any direction on said sheet or film, represented by F(50) and F(75) respectively, wherein said load length is about 5% $\leq$ F(50) $\leq$ 50% and the ratio of load lengths F(75) to F(50) is about 3.5 $\leq$ F(75)/F(50) $\leq$ 7.5.

11. An interlayer in accordance with claims 9 or 10 having mean relative load lengths at cutting levels of 30%, 50% and 75% in any direction on said sheet or film, represented by F(30), F(50) and F(75) respectively, wherein said load lengths are about 1.5% $\leq$ F(30) $\leq$ 10% and about 5% $\leq$ F(50), and the ratio of load lengths F(75) to F(50) is about 3.5 $\leq$ F(75)/F(50) $\leq$ 7.5.

12. An interlayer in accordance with anyone of claims 6 - 11 wherein (a) said thermoplastic resin is defined as in claim 2; and (b) the microscopic projections are defined as in anyone of claims 3 - 6.

[Figure 1]

(a)
Load curve

Relative load length — vertical axis (%): 100, 90, 80, 70, 60, 50, 40, 30, 20, 1·0, 0

Cutting level — horizontal axis: 10 20 3·0 40 50 6·0 70 80 90 100(%)

(b)
Cross sectional curve

Cutting level 0%

Center line

Cutting level 100%

14

[Figure 2]

Relative load length (%) vs Cutting level (%)

[Figure 3]

Relative load length (%) vs Cutting level (%)

[Figure 4]

[Figure 5]

[Figure 6]

PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 215 976 (SEKISUI KAGAKU KOGYO KABUSHIKI KAISHA) <br> * the whole document * <br> --- | 1-12 | B32B17/10 <br> B29C59/02 <br> C03C27/12 |
| D,A | DE-A-2 622 065 (MONSANTO CO) <br> * page 2, paragraph 2 - page 3, paragraph 3 * <br> * page 4, line 17 - page 7, line 6 * <br> --- | 1-12 | |
| D,A | US-A-4 452 840 (MITSUBISHI MONSANTO CHEMICAL COMPANY) <br> * the whole document * <br> ----- | 1-12 | |
| | | | TECHNICAL FIELDS SEARCHED (Int. Cl.5 ) <br><br> B32B <br> B29C <br> C03C |

The present search report has been drawn up for all claims

| Place of search | Date of completion of the search | Examiner |
|---|---|---|
| THE HAGUE | 13 OCTOBER 1992 | VAN BELLEGHEM W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)